# EUROPÄISCHE PATENTSCHRIFT

(11) **EP 0 576 701 B1**
(45) Veröffentlichungstag und Bekanntmachung des Hinweises auf die Patenterteilung: **03.01.1996**
(21) Anmeldenummer: 92111014.4
(22) Anmeldetag: 29.06.1992
(51) Int. Cl.: H04R 25/00

(54) **Hörgerät**
Hearing aid
Prothèse auditive

(43) Veröffentlichungstag der Anmeldung: 05.01.1994
(73) Patentinhaber: Siemens Audiologische Technik GmbH, D-91058 Erlangen (DE)
(72) Erfinder: Martin, Raimund, Dipl.-Ing., W-8557 Bammersdorf (DE)
(74) Vertreter: Fuchs, Franz-Josef, Dr.-Ing.

(56) Entgegenhaltungen:
- EP-A- 0 483 702
- DE-A- 3 917 432
- DE-B- 2 716 336
- PATENT ABSTRACTS OF JAPAN vol. 4, no. 112 (E-021)12. August 1980

## Beschreibung

Die Erfindung bezieht sich auf ein Hörgerät mit einem Eingangswandler, einer eine Endstufe aufweisenden Bearbeitungseinrichtung für Nutzsignale und mit einem Ausgangswandler, wobei die Nutzsignale vor der Endstufe mit einer Abtastfrequenz abtastbar und in Datenwörter wandelbar sowie zeitdiskret bearbeitbar sind.

Aus der DE-AS 27 16 336 ist ein Hörgerät der eingangs genannten Art bekannt. Vor einer Endstufe und nach einem Eingangswandler (Mikrofon) ist ein Analog-Digital-Wandler und eine Schaltung zur zeitdiskreten Bearbeitung der in digitale Datenwörter gewandelten Nutzsignale angeordnet. Für die zeitdiskrete Signalbearbeitung ist des weiteren eine Abtastfrequenz vorgesehen. Die Abtastfrequenz ist nicht geringer gewählt als das Doppelte der oberen Grenzfrequenz der zu bearbeitenden Nutzsignale.

Aus der DE-PS 36 16 752 ist ein Hörgerät bekannt, bei dem in der Endstufe eine zeitdiskrete Nutzsignalbearbeitung mit einer Pulsdauermodulation vorgesehen ist, die mit Hilfe eines Dreiecksignals aus analogen Nutzsignalen gebildet ist. Die Endstufe ist als Schaltverstärker ausgebildet und wird mit dem pulsdauermodulierten Signal angesteuert.

Mit der Erfindung wurde erkannt, daß einerseits eine Kombination von verschiedenen zeitdiskreten Nutzsignalbearbeitungsverfahren in nur einem Hörgerät vorteilhaft sein kann und daß andererseits der erforderliche Aufwand für die mehrfache Umformung der Nutzsignale für unterschiedliche zeitdiskrete Bearbeitung nach voneinander verschiedenen Verfahren relativ groß ist und schon von vornherein zu Platzproblemen in dem relativ kleinen Hörgerät führt. Insbesondere wurde mit der Erfindung erkannt, daß eine Umformung der digital vorliegenden Datenwörter in ein pulsdauermoduliertes Signal im Wege der Rückformung in ein analoges Signal, z.B. durch einen Digital-Analog-Wandler und anschließender Umformung in ein pulsdauermoduliertes Signal mittels eines Dreiecksignals, auch mit relativ großem schaltungstechnischem Aufwand verbunden ist.

Der Erfindung liegt die Aufgabe zugrunde, ein Hörgerät der eingangs genannten Art so auszubilden, daß die in digitale Datenwörter kodierten Nutzsignale ohne Rückwandlung in analoge Signale vorteilhaft in weiterbearbeitbare pulsdauermodulierte Signale wandelbar sind.

Diese Aufgabe wird durch ein Hörgerät mit den Merkmalen gemäß Anspruch 1 gelöst. Ein wesentlicher Vorteil der Erfindung ist, daß die in digitale Datenwörter kodierten Nutzsignale ohne Rückwandlung in analoge Signale unmittelbar in weiterverarbeitbare pulsdauermodulierte Signale mittels einer Zählschaltung wandelbar sind. Dadurch können in dem Hörgerät die Nutzsignale nach zwei voneinander verschiedenen zeitdiskreten Verfahren aufeinanderfolgend bearbeitet werden, ohne daß an einer Schnittstelle zwischen den beiden Verfahren eine Rückwandlung der Nutzsignale in analoge Signale erforderlich ist. Dadurch entfällt ein Digital-Analog-Wandler und eine Schaltung zur Erzeugung eines pulsdauermodulierten Signals z.B. unter Zuhilfenahme eines nur aufwendig erzeugbaren Dreiecksignals.

Die erfindungsgemäß vorgesehene Zählschaltung ist mit geringerem schaltungstechnischem Aufwand realisierbar und kann ohne nennenswertem Platzbedarf in einem regelmäßig in dem Hörgerät vorgesehenen integrierten Schaltkreis integriert werden.

Weitere Vorteile und Einzelheiten ergeben sich aus der nachfolgenden Beschreibung erfindungsgemäßer Ausführungsbeispiele anhand der Zeichnungen und in Verbindung mit den Ansprüchen.

Es zeigen:
Figur 1 ein Hörgerät für zwei voneinander verschiedene zeitdiskrete Nutzsignalbearbeitungsverfahren, wobei die Schnittstelle zwischen beiden Verfahren mittels einer Zählschaltung realisiert ist, und
Figur 2 in detaillierterer Darstellung eine Zählschaltung mit anschließender Endstufe gemäß dem Hörgerät nach Figur 1.

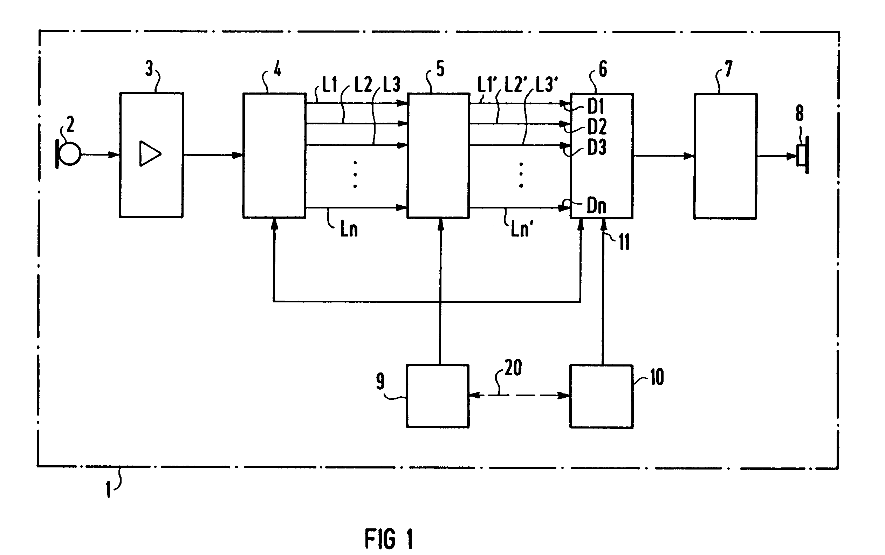

In Figur 1 ist durch eine strichpunktierte Linie ein Hörgerät 1 symbolisch dargestellt. Das Hörgerät 1 weist als Eingangswandler ein Mikrofon 2 auf, das mit einer Bearbeitungseinrichtung für elektrische Nutzsignale verbunden ist. Die Bearbeitungseinrichtung für Nutzsignale umfaßt in diesem Ausführungsbeispiel einen Vorverstärker 3, einen Analog-Digital-Wandler 4, eine zeitdiskrete Nutzsignalbearbeitungsstufe 5, eine Zählschaltung 6 und eine Endstufe 7. Die Endstufe 7 ist als Schaltverstärker ausgebildet und wird mit einem aus der Zählschaltung 6 entnehmbaren pulsdauermodulierten Signal angesteuert. Die als Schaltverstärker ausgebildete Endstufe 7 stellt sonach eine Schaltung für eine zeitdiskrete Signalbearbeitung dar, die von der zeitdiskreten Signalbearbeitung in der Nutzsignalbearbeitungsstufe 5 verschieden ist. Die Endstufe 7 ist mit einem Hörer 8 als Ausgangswandler verbunden.

Vor der Endstufe 7 werden die vom Mikrofon 2 gelieferten elektrischen Nutzsignale in dem Analog-Digital-Wandler 4 mit einer Abtastfrequenz abgetastet und in Datenwörter gewandelt. Die Datenwörter werden über die Leitungen L1 bis Ln als vorzugsweise pulscodemodulierte Nutzsignale der zeitdiskreten Nutzsignalbearbeitungsstufe 5 zugeführt. Die bearbeiteten Datenwörter werden über Leitungen L1' bis Ln' und über parallele Eingänge D1 bis Dn in die Zählschaltung 6 eingelesen. Die Zählschaltung kann nach einer Variante der Erfindung auch über einen (nicht dargestellten) seriellen Eingang seriell mit den Datenwörtern geladen werden. Die Zählschaltung 6, die Nutzsignalbearbeitungsstufe 5 und der Analog-Digital-Wandler 4 werden in diesem Ausführungsbeispiel von einer Abtastfrequenz getaktet, die aus einem Taktgenerator 9 entnehmbar ist. Es ist aber auch möglich, die Zählschaltung 6 so auszubilden, daß eine Ansteuerung mit der Abtastfrequenz entbehrlich ist. Die Zählschaltung 6 erhält aus einem Oszillator 10, der vorzugsweise Rechteckimpulse abgibt, Zählimpulse über einen Eingangsanschluß 11. Durch diese Zählimpulse wird die Zählschaltung 6 nach jedem über die parallelen Eingänge D1 bis Dn eingelesenen Datenwort in einen Ausgangszustand (niedriger oder hoher Pegel) zurückgestellt.

Die Zeitdauer bis zum Eintreten des Ausgangszustandes der Zählschaltung 6 ist vor allem von dem binären Wert des jeweils eingelesenen Datenwortes und von der Pulsfolgefrequenz der Zählschaltung abhängig. Mit der Erfindung wurde auch erkannt, daß die Zeitdauer bis zum Erreichen des Ausgangszustandes der Zählschaltung 6 in Abhängigkeit von den binären Werten der Datenwörter schwankt. Da des weiteren die binären Werte der Datenwörter wiederum von der Amplitude der vom Mikrofon 2 gelieferten elektrischen Nutzsignale abhängig sind, muß folglich auch das Ausgangssignal der Zählschaltung 6 von der Amplitude der vom Mikrofon gelieferten analogen elektrischen Nutzsignale abhängig sein.

Durch die aufeinanderfolgende Eingabe von Datenwörtern in die Zählschaltung, z.B. im Takt der Abtastfrequenz, wechselt der Ausgangszustand der Zählschaltung 6 auch im Takt dieser Abtastfrequenz. Dabei ist gemäß der Erfindung die Dauer bis zum Erreichen des ursprünglichen Ausgangszustandes der Zählschaltung 6 ein Maß für die Amplitude der vom Mikrofon 2 gelieferten analogen elektrischen Nutzsignale. Die Zählschaltung 6 liefert sonach ausgangsseitig ein pulsdauermoduliertes Ausgangssignal, mit welchem die Endstufe 7, die als Schaltverstärker ausgebildet ist, steuerbar ist.

In Ausbildung der Erfindung weisen die von dem Oszillator 10 gelieferten Zählimpulse eine Folgefrequenz auf, die mindestens so groß ist wie das Produkt aus der von dem Taktgenerator 9 gelieferten Abtastfrequenz und aus der Zahl "2", potenziert mit einer maximal zulässigen Bit-Zahl der Datenwörter. Wenn mit "n" die maximal zulässige Bit-Zahl der Datenwörter und mit "f_{T}" die Abtastfrequenz (Taktfrequenz) bezeichnet ist, beträgt die Folgefrequenz der Zählimpulse 2ⁿ · f_{T}.

Die Zählimpulse können durch Frequenzvervielfachung aus der Abtastfrequenz abgeleitet sein oder es kann auch die Abtastfrequenz durch Frequenzteilung aus den Zählimpulsen abgeleitet sein. Dadurch kann auf einfache Weise eine Synchronisation zwischen der Abtastfrequenz des Taktes und der Pulsfolgefrequenz der Zählimpulse erreicht werden. Das ist durch den strichlierten Doppelpfeil 20 zwischen dem Taktgenerator 9 und dem Oszillator 10 in Figur 1 angedeutet. Es ist sonach nur ein gemeinsamer Oszillator erforderlich. Der Schaltungsaufwand und der Platzbedarf wird nochmals reduziert.

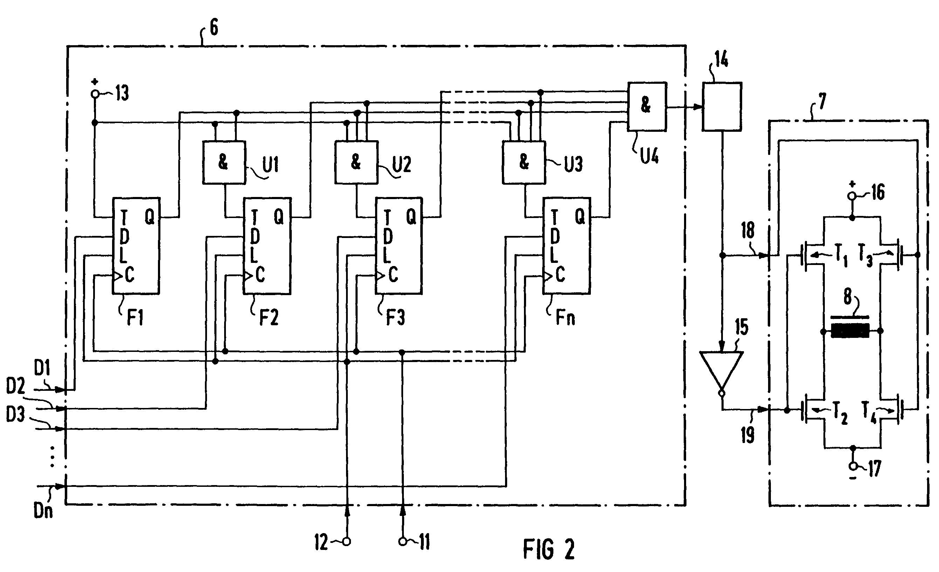

Die in Figur 1 als Blocksymbol dargestellte Zählschaltung 6 ist in Figur 2 als spezielle Zählschaltung 6 mit der daran anschließenden Endstufe 7 dargestellt. Die Zählschaltung 6 enthält eine Kette von Flip-Flop-Schaltungen, die als Dualzähler F1 bis Fn ausgebildet sind.

Jeder der Dualzähler F1 bis Fn besitzt einen Eingang D, der mit je einem der Eingänge D1 bis Dn der Zählschaltung 6 verbunden ist. Über diese Eingänge D1 bis Dn wird jedes zuvor nach einem ersten zeitdiskreten Verfahren bearbeitete Datenwort in z.B. paralleler Form der Zählschaltung zugeführt. Die einzelnen Bits eines jeden Datenwortes setzen dadurch jeden der Dualzähler F1 bis Fn in einen dem jeweils zugeführten Bit entsprechenden Schaltzustand. Die Eingabe der Datenwörter kann über einen Eingang 12 an der Zählschaltung 6 mit Hilfe der Abtastfrequenz gesteuert (getaktet) werden. Die Anzahl der Dualzähler F1 bis Fn entspricht (mindestens) der Anzahl der maximal zulässigen Bit-Zahl der Datenwörter, die über die entsprechende Anzahl der Eingänge D1 bis Dn parallel zugeführt werden.

Die Zählschaltung 6 ist mit den Dualzählern F1 bis Fn als synchron zählende Zählschaltung ausgebildet. Die über den Eingang 11 der Zählschaltung 6 zuführbaren Zählimpulse werden dabei gleichzeitig auf alle Eingänge C an allen Dualzählern F1 bis Fn gegeben. Damit nun nicht bei jedem Zählimpuls alle Flip-Flop's der Dualzähler umkippen, sind die Dualzähler F1 bis Fn als Toggle-Flip-Flop's ausgebildet, die nur dann umkippen, wenn eine Steuervariable, an deren Eingängen T = 1 ist, also ein hohes Potential hat. Ein Flip-Flop in einem der Dualzähler F1 bis Fn darf sonach nur dann umkippen, wenn alle niederwertigeren Flip-Flop's eins sind, d.h. bereits gekippt sind. Um dies zu realisieren, ist jeder Ausgang Q eines dual niederwertigen Zählers F1 bis F3 über ein Und-Gatter U1 bis U3 mit jeweils einem der Eingänge T der Dualzähler F2 bis Fn verbunden. Der Eingang T des Dualzählers F1 und die Und-Gatter U1 bis U3 sind mit einem positiven Potential, z.B. der Betriebsspannung einer Hörgerätebatterie, über einen Anschluß 13 verbunden.

In der speziellen Zählschaltung 6 gemäß Figur 2 ist ein weiteres Und-Gatter U4 vorgesehen. Dieses Und-Gatter U4 ist eingangsseitig mit allen Ausgängen Q der Dualzähler F1 bis Fn verbunden. Daraus folgt, daß das Und-Gatter U4 erst dann ein Ausgangssignal (hoher oder niedriger Pegel) abgibt, wenn alle Dualzähler F1 bis Fn durch die über den Eingang 11 der Zählschaltung 6 zugeführten Zählimpulse in den Ausgangszustand zurückgestellt wurden.

Das von dem Und-Gatter U4 abgegebene Ausgangssignal ist infolge der aufeinanderfolgenden Eingabe von Datenwörtern in die Zählschaltung 6 sonach ein pulsdauermoduliertes Signal. Dieses Signal wird der Endstufe 7 gegebenenfalls über einen Treiber 14 und wegen der Gegentaktausbildung der Endstufe 7 auch als komplementäres Signal über einen Inverter 15 zugeführt.

Die als Schaltverstärker arbeitende Endstufe 7 weist in Figur 2 vier im Schaltbetrieb arbeitende MOS-FET-Transistoren Tl bis T4 auf. Die Transistoren T1 und T2 sowie die Transistoren T3 und T4 sind jeweils komplementär zueinander ausgebildet. Die Endstufe 7 wird über Anschlüsse 16 und 17 mit Betriebsspannung versorgt. Durch den Schaltbetrieb sind entweder die Transistoren T1 und T4 oder T3 und T2 gleichzeitig leitend. Der Zeitraum, innerhalb welchem die Transistoren leitend sind, wird von der jeweiligen Impulsdauer der Einzelpulse des pulsmodulierten Signals bestimmt, das dem Schaltverstärker über Eingänge 18 und 19 aus der Zählschaltung 6 zugeführt wird.

Bei einem Wechsel des Pegels in dem pulsdauermodulierten Signal wechseln auch die leitend geschalteten Transistoren in den nicht leitend geschalteten Zustand und die bisher nicht leitend geschalteten Transistoren werden sodann leitend. Im Ergebnis wird folglich der in dem Brückenzweig der Endstufe 7 angeordnete Hörer 8 zwischen der an den Anschlüssen 16 und 17 liegenden Betriebsspannung (Plus- und Minuspol) umgeschaltet. Durch die Tiefpaßwirkung des Hörers 8 wird das analoge Nutzsignal aus dem pulsdauermodulierten Signal herausgefiltert und hörbar gemacht.

## Patentansprüche

1. Hörgerät mit einem Eingangswandler (2), einer eine Endstufe (7) aufweisenden Bearbeitungseinrichtung (3, 4, 5, 6, 7) für Nutzsignale und mit einem Ausgangswandler (8), wobei die Nutzsignale vor der Endstufe (7) mit einer Abtastfrequenz abtastbar und in Datenwörter wandelbar sowie zeitdiskret bearbeitbar sind, dadurch gekennzeichnet, daß die bearbeiteten Datenwörter über wenigstens einen Eingang (D1 bis Dn) in eine Zählschaltung (6) einlesbar sind, die nach jedem eingelesenen Datenwort mit Zählimpulsen in einen Ausgangszustand stellbar ist und daß mit einem Ausgangssignal der Zählschaltung (6) die Endstufe (7) steuerbar ist, die als Schaltverstärker ausgebildet ist.

2. Hörgerät nach Anspruch 1, wobei die Zählimpulse eine Folgefrequenz aufweisen, die mindestens so groß ist wie das Produkt aus der Abtastfrequenz und aus der Zahl "2", potenziert mit einer maximal zulässigen Bit-Zahl der Datenwörter.

3. Hörgerät nach Anspruch 1 oder 2, wobei die Zählimpulse durch Frequenzvervielfachung aus der Abtastfrequenz ableitbar sind.

4. Hörgerät nach Anspruch 1 oder 2, wobei die Abtastfrequenz durch Frequenzteilung aus den Zählimpulsen ableitbar ist.

5. Hörgerät nach einem der Ansprüche 1 bis 4, wobei die Zählschaltung (6) eine Kette von Flip-Flop-Schaltungen (F1 bis Fn) aufweist, deren Anzahl der maximal zulässigen Bit-Zahl der Datenwörter entspricht.

6. Hörgerät nach einem der Ansprüche 1 bis 5, wobei die Zählschaltung (6) aus einer Kette von Dualzählern (F1 bis Fn) gebildet ist, die durch Und-Gatter (U1 bis U3) miteinander derart verkettet sind, daß jeder Dualzähler (F1 bis Fn) nur dann kippt, wenn alle dual niederwertigen Zähler (F1 bis F3) bereits gekippt sind, wobei alle Dualzähler (F1 bis Fn) gleichzeitig mit den Zählimpulsen ansteuerbar sind.

## Claims

1. Hearing aid having an input transducer (2), a processing device (3, 4, 5, 6, 7) with an output stage (7) for useful signals and having an output transducer (8), whereby the useful signals can be sampled in front of the output stage (7) with a sampling frequency and can be converted into data words and can be processed in discrete-time fashion, characterized in that the processed data words can be read by way of at least one input (D1 to Dn) into a counting circuit (6), which can be placed after each read data word with counting pulses into an initial state and in that the output stage (7) can be controlled with an output signal of the counting circuit (6), which output stage is constructed as a switching amplifier.

2. Hearing aid according to claim 1, whereby the counting pulses have a repetition rate which is at least as large as the product of the sampling frequency and the number "2", raised to a higher power with a maximum allowable bit number of the data words.

3. Hearing aid according to claim 1 or 2, whereby the counting pulses can be derived from the sampling frequency by frequency multiplication.

4. Hearing aid according to claim 1 or 2, whereby the sampling frequency can be derived from the counting pulses by frequency division.

5. Hearing aid according to one of claims 1 to 4, whereby the counting circuit (6) has a chain of flipflop circuits (F1 to Fn), the number of which corresponds to the maximum allowable bit number of the data words.

6. Hearing aid according to one of claims 1 to 5, whereby the counting circuit (6) is formed from a chain of binary counters (F1 to Fn) which are linked to each other by way of AND-gates (U1 to U3) in such a way that each binary counter (F1 to Fn) only changes state if all binarily low-order counters (F1 to F3) have already changed state, whereby all binary counters (F1 to Fn) can be controlled simultaneously with the counting pulses.

## Revendications

1. Appareil de correction auditive comportant un transducteur d'entrée (2) , un dispositif de traitement (3,4,5,6,7) pour des signaux utiles, qui a un étage final (7), et un transducteur de sortie (8), les signaux utiles pouvant être échantillonnés en amont de l'étage final (7) à une fréquence d'échantillonnage et pouvant être convertis en mots de données et être traités d'une manière discrète dans le temps, caractérisé par le fait que les mots de données traités peuvent être réintroduits, par l'intermédiaire d'au moins une entrée (D1 à Dn) dans un circuit de comptage (6), qui, après chaque introduction d'un mot de donnée, peut être placé, au moyen d'impulsions de comptage, dans un état initial, et que l'étage final (7), qui est sous la forme d'un amplificateur de commutation, peut être commandé par un signal de sortie du circuit de comptage (6).

2. Appareil de correction auditive suivant la revendication 1, dans lequel les impulsions de comptage ont une fréquence de récurrence, qui est au moins égale au produit de la fréquence d'échantillonnage par le chiffre "2", élevée à une puissance égale au nombre maximum admissible de bits des mots de données.

3. Appareil de correction auditive suivant la revendication 1 ou 2, dans lequel les impulsions de comptage peuvent être dérivées de la fréquence de balayage, par multiplication de fréquence.

4. Appareil de correction auditive suivant la revendication 1 ou 2, dans lequel la fréquence d'échantilonnage peut être obtenue à partir des impulsions de comptage par division de fréquence.

5. Appareil de correction auditive suivant l'une des revendications 1 à 4, dans lequel le circuit de comptage (6) comporte une chaîne de circuit à bascule bistable (F1 à Fn), dont le nombre correspond au nombre maximum admissible de bits des mots de données.

6. Appareil de correction auditive suivant l'une des revendications 1 à 5, dans lequel le circuit de comptage (6) est formé d'une chaîne de compteurs binaires (F1 à Fn), qui sont reliés entre eux par des portes ET (U1 à U3) de telle sorte que chaque compteur binaire (F1 à Fn) ne bascule que lorsque tous les compteurs binaires (F1 à F3) de plus faible poids de bit ont déjà basculé, tous les compteurs binaires (F1 à Fn) pouvant être commandés simultanément par les impulsions de comptage.
